# EUROPEAN PATENT APPLICATION

(11) **EP 2 716 479 A1**
(43) Date of publication of application: **09.04.2014**
(21) Application number: 12793384.4
(22) Date of filing: 25.05.2012
(51) Int. Cl.: B60H 1/22

(54) **ELECTRICAL HEATING DEVICE, AND ELECTRIC VEHICLE**

(30) Priority: 27.05.2011 JP 2011118904
(71) Applicant: TBK Co., Ltd., Machida-shi, Tokyo 194-0045 (JP)
(72) Inventor: KATAYAMA, Hiroaki, Machida-shi Tokyo 194-0045 (JP); OBA, Mitsuyoshi, Machida-shi Tokyo 194-0045 (JP); TAKUMI, Hisashi, Machida-shi Tokyo 194-0045 (JP); TAKAHASHI, Junichi, Machida-shi Tokyo 194-0045 (JP)
(74) Representative: Louis Pöhlau Lohrentz
(86) International application number: PCT/JP2012/003432
(87) International publication number: WO 2012/164894

(57) **Abstract**

[Problem to be solved] An electric heating device suitable for heating an electric vehicle and having a novel structure is provided.

[Solution] An electric heating device (100) includes: an electric motor that includes a stator (10) having a plurality of stator coils (11) arranged along the circumferential direction to generate a rotating magnetic field and a disk-shaped rotor (20) that includes a plurality of one-turn coils (22) disposed correspondingly to the stator coils (11) and a soft magnetic metal plate (21) supporting the one-turn coils (22); and a fan secured to the soft magnetic metal plate (21) on a side thereof opposite from the one-turn coils (22) and including a vane wheel that has a plurality of vanes (33) and rotates integrally with the rotor (20).

## Description

### TECHNICAL FIELD

The present invention relates to an electric heating device and an electric vehicle, and more particularly to an electric heating device that is suitable as a heating device for electric vehicles, and an electric vehicle provided with the heating device.

### BACKGROUND ART

Conventionally, heating devices for vehicles generally utilize engine exhaust heat. However, electric vehicles (EV), use of which is expected to explosively spread in future, cannot use the engine exhaust heat. Therefore, an electric heating device using a battery power supply as an energy source and having good performance is desired.

Electric heating devices used with electric vehicles are roughly classified into heating devices using a heat pump system and heating devices using a ceramic heater. As a ceramic heater, a ceramic heater using an air heating system and a ceramic heater using a water heating system are known. Heating devices using a heat pump system for use with electric vehicles are disclosed, for example, in Patent Documents 1 to 3.

### Prior Art Documents

### Patent Documents

Patent Document 1: Japanese Unexamined Patent Publication No. H09-118126
Patent Document 2: Japanese Unexamined Patent Publication No. H11-105537
Patent Document 3: Japanese Unexamined Patent Publication No. 2000-033916
Patent Document 4: Japanese Unexamined Patent Publication No. 2010-154737
Patent Document 5: Japanese Patent No. 4337961

### DISCLOSURE OF INVENTION

Conventional electric heating devices using a heat pump system or a ceramic heater have the following drawbacks to be overcome.

The first drawback is that the device configuration is complicated since the heating element (heat source) and the fan are provided separately. The second drawback is that the upper limit of the temperature of the heat source is a relatively low temperature of around 350°C and this may often result in a large heat source. The third drawback is that, since the heat source typically involves wiring and piping, it is not easy to attach and remove the heat source onto and from a vehicle and this makes maintenance of the device difficult.

In view of the above-described circumstances, the present invention is directed to providing an electric heating device that is suitable as a heating device for electric vehicles, and has a simple configuration and a novel structure wherein a heat source and a fan are integrally formed.

In order to achieve the above-described object, the invention is further directed to providing an electric heating device that facilitates size reduction of the heat source since the upper limit of the heat source temperature is relatively high, and facilitates attachment and removal of the heat source since the heat source does not involve wiring and piping, thereby facilitating maintenance of the device.

The invention is also directed to providing an electric vehicle provided with the above-described electric heating device.

The above-described objects of the invention are accomplished by an electric heating device including: an electric motor including a disk-shaped stator that includes a plurality of stator coils arranged along a circumferential direction to generate a rotating magnetic field, and a disk-shaped rotor that includes a plurality of one-turn coils disposed correspondingly to the stator coils and a soft magnetic metal plate disposed on an opposite side of the one-turn coils from the stator and supporting the one-turn coils, the disk-shaped rotor being rotatably driven by the rotating magnetic field; and a fan secured to the soft magnetic metal plate on a side thereof opposite from the one-turn coils and including a vane wheel that has a plurality of vanes and rotates integrally with the rotor.

The electric vehicle of the invention includes the above-described electric heating device of the invention.

In the electric heating device of the invention (which may hereinafter also be referred to simply as "heating device"), the rotor forming the heat source and the fan for generating airflow that is heated by heat from the heat source are integrally disposed, thereby simplifying the device configuration.

In the heating device of the invention, a relatively high upper limit of the temperature of the rotor forming the heat source can be set, and this facilitates size reduction of the heat source while obtaining a high heating capability.

In the heating device of the invention, the rotating portion where the rotor forming the heat source and the fan for generating airflow are integrally formed does not require connection of wiring and piping. This facilitates attachment and removal of the rotating portion, which is the main portion to be checked during maintenance of the heating device, thereby providing a heating device that facilitates maintenance work, such as cleaning, filter replacement, etc.

In a case where the electric vehicle of the invention is provided with the above-described heating device for each of a plurality of airflow outlet ports in the vehicle, for example, heating temperature can be controlled for each part of the vehicle, and it is not necessary to provide an air duct etc., thereby allowing improvement of equipment layout efficiency in the vehicle.

### BRIEF DESCRIPTION OF THE DRAWINGS

FIG. 1 is a partially sectional side view showing a heating device according to one embodiment of the present invention,
FIG. 2 is a front view of a stator of the heating device shown in FIG. 1,
FIG. 3 is a rear view of a rotor of the heating device shown in FIG. 1,
FIG. 4 is a sectional view of the heating device shown in FIG. 1,
FIG. 5 is a front view of a casing of the heating device shown in FIG. 1,
FIG. 6 is a graph showing characteristics of the heating device of one example of the invention, and
FIG. 7 is a graph showing characteristics of an electric motor of the heating device of one example of the invention.

### DESCRIPTION OF PREFERRED EMBODIMENTS

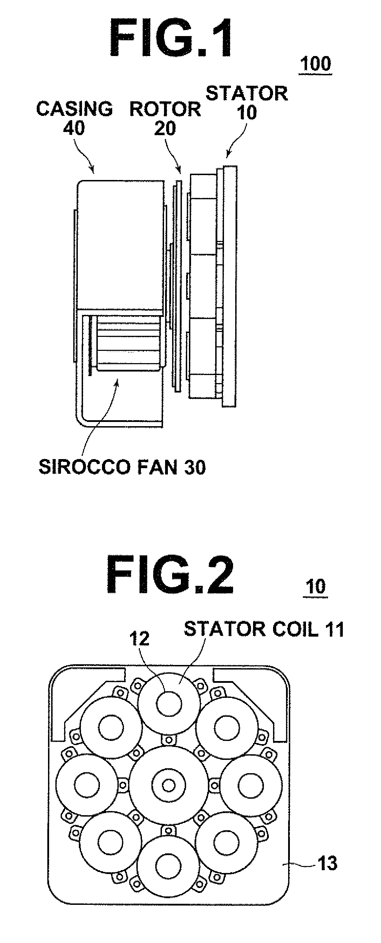

Hereinafter, an embodiment of the present invention will be described in detail with reference to the drawings. FIG. 1 is a partially sectional side view of a heating device according to one embodiment of the invention. It should be noted that, in the following description, the left side in FIG. 1 is assumed to be the front side. The heating device 100 includes a stator 10, a rotor 20 disposed in front of the stator 10 with an air gap therebetween, a sirocco fan (fan) 30, and a casing 40. The heating device 100 is used in a state where the stator 10 and the casing 40 are respectively secured at predetermined positions in an electric vehicle, for example. The stator 10 and the rotor 20 form an induction electric motor that forms a driving unit of the heating device 100.

The sirocco fan 30 forms a driven part of the induction electric motor and is rotatably supported by the casing 40 together with the rotor 20. The rotor 20 faces the stator 10 with a predetermined clearance (for example, an air gap of around 2 to 10 mm) therebetween.

FIG. 2 is a front view showing the arrangement of the stator 10. The stator 10 includes a coil row that includes eight stator coils 11 arranged at regular intervals in the circumferential direction. The coil row is formed by two coil groups, each of which includes four stator coils 11 connected in series. The stator coils 11 belonging to one of the coil groups and the stator coils 11 belonging to the other of the coil groups are alternately arranged. A first AC power supply (sin power supply) with controlled frequency and voltage is applied to the one of the coil groups, and a second AC power supply (cos power supply) with controlled frequency and voltage and the phase thereof being shifted by 90 degrees, for example, from that of the first AC power supply is applied to the other of the coil groups. Each stator coil 11 is wound on a bobbin covering a magnetic core 12, and each magnetic core 12 is supported on a support plate 13 that forms a magnetic circuit. The support plate 13 is made of permalloy, for example, and the stator coil 11 is made of copper wire, for example. The magnetic core 12 is made of ferrite, for example.

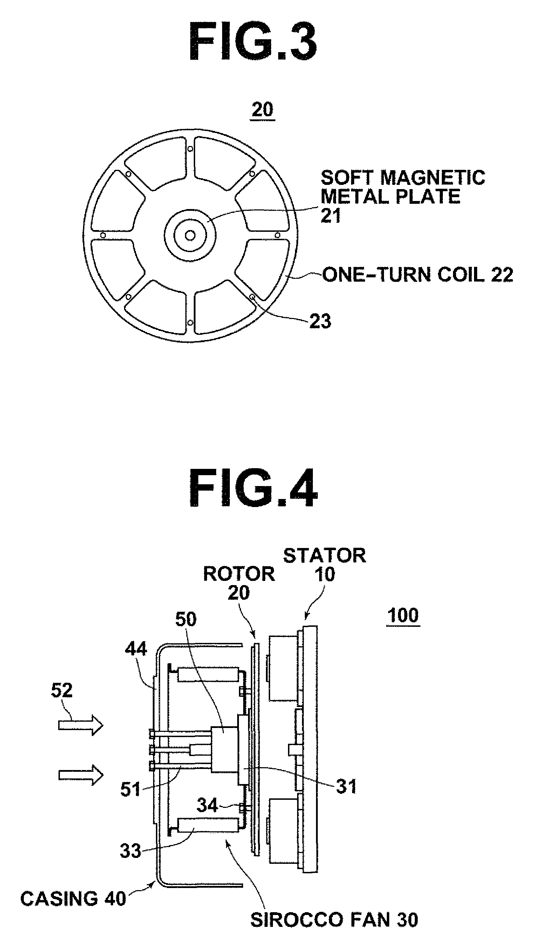

FIG. 3 is a rear view of the rotor 20. The rotor 20 includes a disk-shaped soft magnetic metal plate 21 having a thickness of about 3 to 5 mm, and eight one-turn coils 22 that are secured on the surface of the soft magnetic metal plate 21 and are arranged at regular intervals in the circumferential direction. The one-turn coils 22 are arranged correspondingly to the stator coils 11. The one-turn coils 22 generate a circulating current when a rotating magnetic field is generated at the coil row. Joule heat is generated by the circulating current, and the one-turn coils 22 are rotatably driven by the rotating magnetic field via the circulating current. The soft magnetic metal plate 21 generates an eddy current therein due to the rotating magnetic field generated at the stator coils 11. The eddy current in the soft magnetic metal plate 21 supplements part of the torque of the rotor 20, and the soft magnetic metal plate 21 functions as a main heat source of the heating device. Bolt holes 23 receive support bolts 34 (FIG. 4) inserted therein for securing the sirocco fan 30 and the rotor 20 together. It should be noted that, although the coils on the rotor 20 are referred to as one-turn coils in this specification for the sake of convenience, the number of turns of the coils on the rotor 20 is not necessarily be limited to one and may be two or more turns. The soft magnetic metal plate 21 is made of an iron plate, for example, and the one-turn coils 22 are made of aluminum, for example.

FIG. 4 is a sectional view of the entire heating device 100 showing the structure of each of the sirocco fan 30, the casing 40 and the rotor 20 and how they are connected. The sirocco fan 30 includes a base 31, a frame 32 supported by the base 31, and a vane wheel having a plurality of vanes 33 arranged in the circumferential direction. The base 31 of the sirocco fan 30 is rotatably supported by the casing 40 via a bearing 50 and a bearing support post 51. The soft magnetic metal plate 21 (FIG. 2) of the rotor 20 is secured to the frame 32 of the sirocco fan 30 via bolts 34.

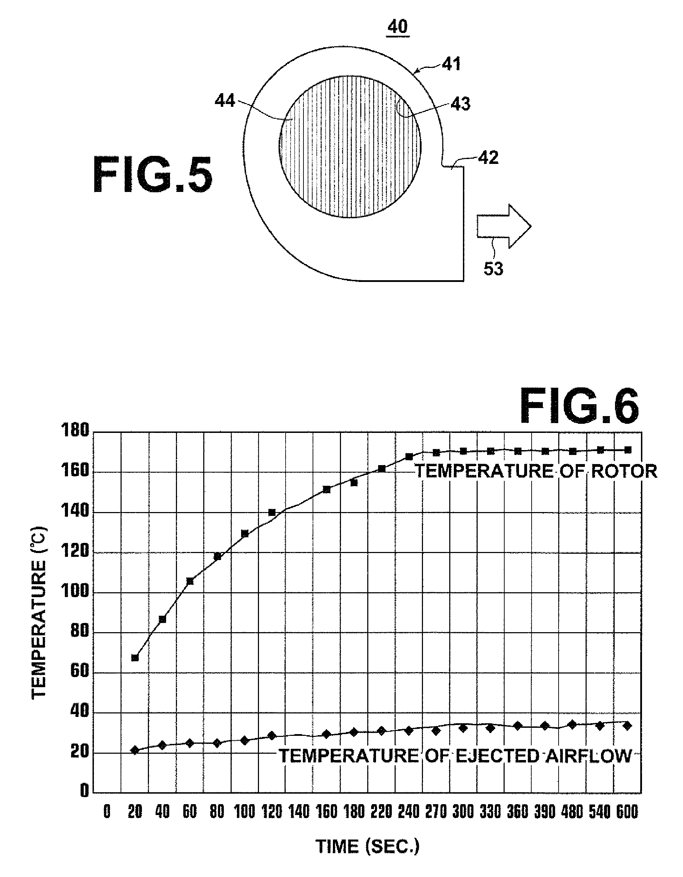

FIG. 5 is a front view of the casing 40. The casing 40 includes a main body portion 41, into which airflow 52 (FIG. 4) is taken through an air inlet port 43, and an airflow ejection port 42 extending from the main body portion 41 and ejecting airflow 53. The air inlet port 43 is provided with a louver formed by a number of blades 44. The casing 40 is formed by a highly heat-insulating resin, and selecting such a material increases thermal efficiency of the entire heating device. The casing 40 has a protecting function for protecting the sirocco fan 30 by enclosing the sirocco fan 30 as a whole and a straightening function for straightening the airflow. It should be noted that the casing having the straightening function is sufficient and the casing may not necessarily enclose the sirocco fan as a whole or have the protecting function for protecting the sirocco fan 30.

When the heating device 100 of the above-described embodiment is operated, a rotating magnetic field is generated by applying the two-phase alternating currents with controlled frequency and voltage (electric power) to the coil groups of the coil row. By this rotating magnetic field, a circulating current is generated at the one-turn coils 22 of the rotor 20, and an eddy current is generated in the soft magnetic metal plate 21. Due to the thus generated circulating current, eddy current and rotating magnetic field, a rotational driving force is applied to the rotor 20 from the stator 10. Further, Joule heat is generated at the one-turn coils 22 and the soft magnetic metal plate 21 due to the circulating current and the eddy current. The sirocco fan 30 secured to the rotor 20 rotates together with the rotor 20, thereby taking in the airflow through the air inlet port 43 of the casing 40 and ejecting the airflow through the airflow ejection port 42. At this time, the airflow 52 taken into the casing 40 is heated by the Joule heat generated at the one-turn coils 22 and the soft magnetic metal plate 21 of the rotor 20 and becomes the warm airflow 53 to be ejected through the airflow ejection port 42. The airflow 53 is introduced into the interior of an electric vehicle, for example, to heat the interior of the vehicle.

It should be noted that an AC energy converter (induction motor) including a stator and a rotor that are similar to the stator 10 and the rotor 20 described above is disclosed in Japanese Unexamined Patent Publication No. H10-98860, which is incorporated herein by reference.

FIG. 6 shows measured characteristics of a prototype heating device that was produced as one example of the invention. Heating capability was measured based on how much the temperature was increased from an intake air temperature of 20°C under a predetermined frequency and a predetermined rotation speed. Further, the reached temperature of the rotor at that time was also measured. The power supply of the heating device was provided by an inverter device that used a battery as the power supply.

In the prototype heating device of the example, each of the eight stator coils 11 of the induction electric motor was made of a copper wire with the number of turns of 30, which was wound on the ferrite magnetic core 12 having an outer diameter of 15 mm ϕ. The soft magnetic metal plate 21 of the rotor 20 was made of an iron plate having an outer diameter of 150 mm and a thickness of 3.2 mm, and an aluminum disk having an outer diameter of 150 mm and a thickness of 2 mm was placed on the surface of the iron plate. The aluminum disk includes eight rectangular holes arranged at regular intervals in the circumferential direction, and surface portions of the soft magnetic metal plate 21 were embedded in the rectangular holes. With this structure, the rear surface of the rotor 20 was flat as a whole, and the eight one-turn coils 22 were provided. The air gap between the stator 10 and the rotor 20 was 2.6 mm. It should be noted that the size of the air gap can be selected in the range from about 2 mm to about 10 mm, for example. The vane wheel of the sirocco fan 30 had an outer diameter of 120 mm and a length of 53 mm in the axial direction. The vanes and the frame were made of aluminum having a thickness of 1 mm.

Two-phase alternating currents of 1.5 kHz with a phase difference of 90 degrees therebetween was applied to the coil row of the stator 10 of the prototype heating device. The characteristics shown in FIG. 6 were obtained when the applied voltage was adjusted and the power consumption was controlled such that the rotation speed of the sirocco fan 30 was 1500 rpm. As shown in FIG. 6, the rotor temperature and the temperature of the ejected airflow were almost saturated about 240 seconds after the start of operation, and the power consumption at that time was 446 W. The heating value at that time was calculated and found to be about 400 W. Therefore, the power consumption for producing airflow was about 46 W. For the intake air temperature of 20°C, the saturated temperature of the ejected airflow was 33.7°C, and it was conformed that sufficient heating capability was obtained. Further, the saturated temperature of the rotor 20 at that time was 171°C.

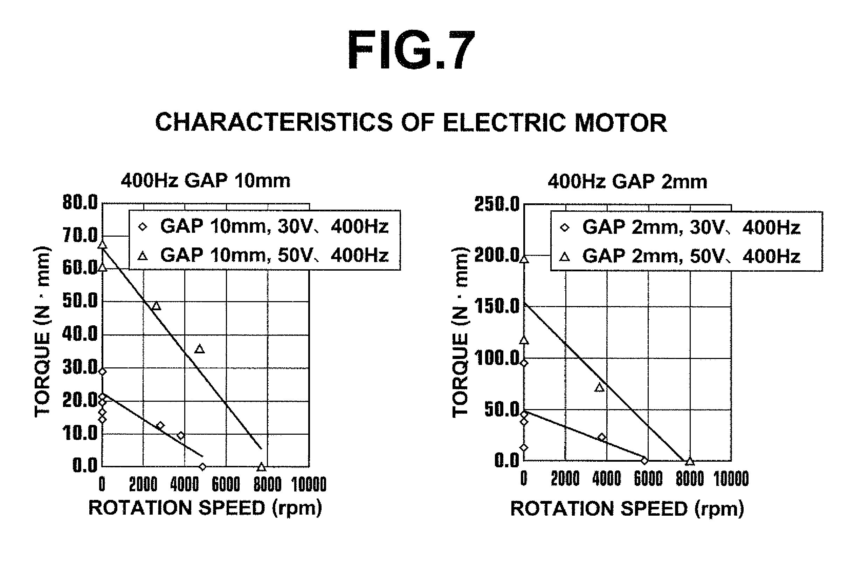

FIG. 7 shows measurement results of the characteristics of the electric motor of the heating device of the above-described example. The characteristics were measured under conditions where the air gap (GAP) between the stator 10 and the rotor 20 was 2 mm and 10 mm, respectively. Two-phase alternating currents with a frequency of 400 Hz and power supply voltages of 30 V and 50 V were applied to each of the electric motors having these air gaps, and electrical characteristics and a generated torque from the start of the motor were measured. Each electric motor was started several times and the characteristics were measure each time. It can be understood from the characteristics shown in FIG. 7 that selection and control of the torque to provide a necessary air volume for the sirocco fan can be achieved by selecting the air gap length, the applied voltage and the power supply frequency. It should be noted that control of the heating value is preferably achieved by controlling the applied voltage and/or the power supply frequency.

It can be seen from the results of measurement that the heating temperature and the heating air velocity of the heating device of this example can be controlled by controlling the frequency and/or the voltage (electric power). For example, control of the frequency within the range from 0.2 kHz to 5 kHz and control of the electric power within the range from 50 W to 500 W were effective. In view of the materials used and the environmental conditions, the upper limit of the reached temperature of the rotor 20 is about 500°C.

In general, as a heating electric power for a vehicle, 2400 W is necessary for a small car and 3910 W is necessary for a large car ("Jidosha-Kogaku Handbook" (automotive engineering handbook)). In the case of the heating device used in the above-described example, a heating capability required for a heating device for a vehicle can be obtained by providing around 5 to 10 heating devices. In this case, necessity of providing an air duct, etc., can be eliminated by disposing the heating device at each airflow ejection port, for example, and improvement of equipment layout efficiency in a vehicle is expected. In this case, temperature setting can be made for each part of the interior of the vehicle. For example, a preferred heating temperature in the range from 24°C to 28°C for the upper body and a preferred heating temperature in the range from 28°C to 32°C for the lower body can be set independently.

In the case where the heating device of the invention is used as a heating device for a vehicle, an air gap may be provided between the stator 10 and the rotor 20, or an insulating material may be disposed between the stator 10 and the rotor 20. In the latter case, for example, the stator 10 may be embedded at a position inside the body of the vehicle where the staton 10 is not visible from the interior of the vehicle, and the rotor 20 may be disposed at a position in the interior of the vehicle where the rotor 20 faces the stator 10. In this case, a number of stators may be disposed in advance, and rotors may be disposed to face only some of the stators that are disposed at suitable positions. This allows determining the number and the layout of the heating devices at the final stage of the production of a vehicle.

It should be noted that, in a case where a vehicle is provided with one heating device of the above-described embodiment, for example, the motor of the heating device of the above-described example is designed to have a large capacity accordingly. In this manner, a heating capability of the same level as that of a conventional heating device utilizing the engine exhaust heat can be provided.

In the heating device of the invention, the reached temperature of the rotor is preferably set in the range from about 200°C to 500°C. Setting a high reached temperature of the rotor allows size reduction of the rotor, thereby allowing reducing the heat capacity of the rotor. In this case, the rise time of the heating device can be reduced, thereby allowing efficient heating of a vehicle.

As the induction electric motor of the heating device of the above-described embodiment, electric motors of the types disclosed in Patent Documents 4 and 5 are preferably usable. However, the electric motor used in the heating device of the invention is not limited to the induction electric motors disclosed in these patent documents, and may be any electric motor that has a structure where the rotor forming the heat source rotates together with the fan.

In the example shown in the above-described embodiment, the sirocco fan is employed as the fan. Employing the sirocco fan facilitates size reduction of the heating device. However, the fan used in the heating device of the invention is not necessarily limited to the sirocco fan, and any of various types of fans that can be secured to a rotor forming the heat source for generating Joule heat due to an eddy current and/or a circulating current and can rotate together with the rotor may be used. Further, while the example where the two-phase alternating currents are used to generate the rotating magnetic field has been shown, polyphase alternating currents of three or more phases may be used to generate the rotating magnetic field.

As described above, in the heating device of the invention, the rotor forming the heat source and the fan for generating airflow that carries heat from the heat source are integrally disposed, thereby simplifying the device configuration.

Further, in the heating device of the invention, the rotating portion where the rotor forming the heat source and the fan for generating airflow are integrally formed does not require connection of wiring and piping. This facilitates attachment and removal of the rotating portion, which is the main portion to be checked during maintenance of the heating device of an electric vehicle, or the like, thereby facilitating maintenance of the device.

The present invention has been described based on the preferred embodiment and the example thereof. However, the electric heating device of the invention is not limited to one having the arrangement disclosed in the above-described embodiment and the example, and heating devices with various modifications and changes made to the arrangement disclosed in the above-described embodiment and the example are also encompassed by the scope of the invention.

## Claims

1. An electric heating device comprising:
an electric motor including
a disk-shaped stator that includes a plurality of stator coils arranged along a circumferential direction to generate a rotating magnetic field, and
a disk-shaped rotor that includes a plurality of one-turn coils disposed correspondingly to the stator coils and a soft magnetic metal plate disposed on an opposite side of the one-turn coils from the stator and supporting the one-turn coils, the disk-shaped rotor being rotatably driven by the rotating magnetic field; and
a fan secured to the soft magnetic metal plate on a side thereof opposite from the one-turn coils and including a vane wheel that has a plurality of vanes and rotates integrally with the rotor.

2. The electric heating device as claimed in claim 1, wherein the fan is a sirocco fan.

3. The electric heating device as claimed in claim 1 or 2, wherein the rotating magnetic field is generated by two-phase alternating currents.

4. The electric heating device as claimed in claim 3, wherein the stator coils includes stator coils of a first group, to which an alternating current voltage having a predetermined frequency and a predetermined voltage is applied, and stator coils of a second group, to which an alternating current voltage with a phase shifted by 90 degrees from that of the alternating current voltage applied to the stator coils of the first group is applied, wherein the stator coils of the first group and the stator coils of the second group are alternately arranged along the circumferential direction of the stator on the disk.

5. The electric heating device as claimed in claim 4, wherein the frequency of the alternating current voltages applied to the stator coils of the first group and the stator coils of the second group is adjustable in the range from 0.2 kHz to 5 kHz.

6. The electric heating device as claimed in claim 4 or 5, wherein alternating current powers supplied to the stator coils of the first group and the stator coils of the second group are adjustable in the range from 50 W to 500 W.

7. The electric heating device as claimed in any one of claims 1 to 6, wherein the stator and the rotor face each other with a clearance in the range from 2 mm to 10 mm therebetween.

8. An electric vehicle comprising the electric heating device as claimed in claim 1 or 2.

9. The electric vehicle as claimed in claim 8, wherein the electric heating device is provided for each of a plurality of airflow outlet ports in the vehicle.

10. The electric vehicle as claimed in claim 9, wherein a heating capability of each electric heating device is adjustable for each airflow outlet port.
